(19) Europäisches Patentamt
European Patent Office
Office européen des brevets

(11) **EP 4 692 755 A1**

(12) **EUROPEAN PATENT APPLICATION**
published in accordance with Art. 153(4) EPC

(43) Date of publication:
**11.02.2026 Bulletin 2026/07**

(21) Application number: **23935448.3**

(22) Date of filing: **08.12.2023**

(51) International Patent Classification (IPC):
**G01N 3/24** (2006.01)       **G01N 17/00** (2006.01)

(52) Cooperative Patent Classification (CPC):
**G01N 3/24; G01N 17/00**

(86) International application number:
**PCT/JP2023/044117**

(87) International publication number:
**WO 2024/224677 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.04.2023 JP 2023072154**

(71) Applicant: JFE Steel Corporation
Tokyo, 100-0011 (JP)

(72) Inventors:
• **MATSUKI Yuichi**
**Tokyo 100-0011 (JP)**
• **NAKAGAWA Kinya**
**Tokyo 100-0011 (JP)**
• **SHINMIYA Toyohisa**
**Tokyo 100-0011 (JP)**

(74) Representative: **Grünecker Patent- und Rechtsanwälte PartG mbB Leopoldstraße 4 80802 München (DE)**

(54) **DELAYED FRACTURE CHARACTERISTIC EVALUATION METHOD, DELAYED FRACTURE PREDICTION METHOD, PROGRAM, PRESS-MOLDED ARTICLE PRODUCTION METHOD, AND SHEARING DEVICE**

(57)    Provided is a technology to evaluate the influence of a shearing condition for shearing to form a sheared end surface, on the delayed fracture characteristic of the sheared end surface. A delayed fracture characteristic evaluation method for evaluating a delayed fracture characteristic of a sheared end surface of a metal sheet (10) made of a high-tensile steel sheet includes: preparing a test piece having the sheared end surface from the metal sheet (10) by performing shearing on the metal sheet (10); after the preparing of the test piece, leaving the test piece under a hydrogen charging environment with a load stress being applied to the sheared end surface of the test piece; and evaluating the delayed fracture characteristic of the sheared end surface relative to a shearing condition in the shearing.

FIG. 1

EP 4 692 755 A1

## Description

Technical Field

The present invention relates to a technology suitable for evaluation of delayed fracture on a sheared end surface of a press-formed article produced from a metal sheet made of a high-tensile steel sheet, and a technology using the evaluation technology. In the present specification, the high-tensile steel sheet refers to a steel sheet having a tensile strength equal to or more than 980 MPa.

Background Art

Presently, automobiles are required to be improved in fuel efficiency by reduction in weight and in collision safety. In order to balance a reduction in weight of a vehicle body and protection of an occupant at the time of collision, a high-tensile steel sheet tends to be used for a component constituting the vehicle body. In recent years, a super high-tensile steel sheet having a tensile strength equal to or more than 1470 MPa has been also applied to vehicle bodies. One of the problems at the time when a high-tensile steel sheet is applied to a vehicle body is delayed fracture. Particularly, delayed fracture caused from an end surface after shearing is a principal problem for a high-tensile steel sheet having a tensile strength equal to or more than 980 MPa. Note that the end surface after shearing is also referred to as a sheared end surface. It is known that a large tensile stress remains on this sheared end surface. On this account, the occurrence of delayed fracture on the sheared end surface is concerned.

PTL 1 discloses a method, for example, as a method for evaluating delayed fracture on a sheared end surface. In the method of PTL 1, a test piece to which stress is applied is immersed with hydrogen and hydrogen embrittlement of the sheet steel is evaluated.

Citation List

Patent Literature

PTL 1: JP 5196926 B

Summary of Invention

Technical Problem

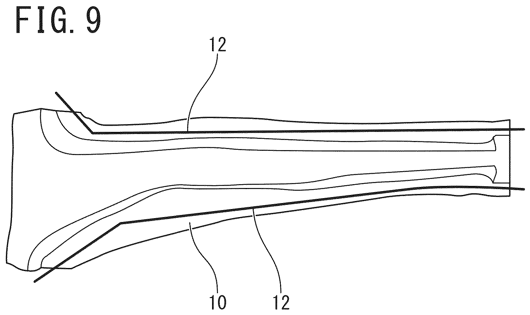

Here, a sheared end surface of an automobile component includes two types of sheared end surfaces, i.e., a pre-trimmed portion and a post-trimmed portion. The pre-trimmed portion is a portion sheared before press forming. The post-trimmed portion is a portion sheared after press forming. The post-trimmed portion is formed in a case where a portion to be pressed by a sheet presser is required at the time of drawing, for example. In this case, for example, after press forming, an unnecessary flange portion for drawing is subjected to shearing (post-trimming) along a product outline (see FIG. 9).

In the case of such post-trimming, a pressed component already having a shape by press forming is restrained by a lower die and a sheet presser along its component shape. In the case of post-trimming, it is necessary to perform shearing in the restrained state.

However, the shape of the pressed component to be restrained is not uniform due to a problem of shape variations such as a discrepancy from a target component shape. The discrepancy occurs due to spring back, for example. Since the shape is not uniform, the lower die or the sheet presser tends to insufficiently abut with the component (the metal sheet). Accordingly, the surface of the sheet presser or the surface of the lower die for restraining the metal sheet may have a portion that does not make contact with the component (the metal sheet) to be restrained. That is, a restrained portion may have a gap from the sheet presser or the lower die at the time of shearing.

From such a fact, the inventors of the present invention found out that pre-trimming for shearing a flat metal sheet before press forming and post-trimming for searing the metal sheet after forming would result in different characteristics on a sheared end surface.

However, a conventional delayed fracture characteristic evaluation method in PTL 1 or the like does not particularly focus on evaluation of the sheared end surface of such a post-trimmed portion.

In consideration of production processes of an actual press-formed article, particularly, a mass-produced automobile component, a delayed fracture evaluation for such a post-trimmed portion is very important. The present invention is accomplished in view of such points. An object of the present invention is to provide a technology to evaluate the influence of a shearing condition for shearing to form a sheared end surface, on the delayed fracture characteristic of the sheared end surface.

Solution to Problem

From the above finding, the inventors focused on a shearing condition varying depending on the degree of poor contact of a sheet presser or a lower die with a metal sheet which poor contact is caused by shape variations before trim forming in a post-trimmed portion. The inventors considered providing a technique to quantitatively evaluate the influence on the delayed fracture characteristic of a sheared end surface. Besides, the inventors found out that a sheet restraint condition was important as a shearing condition in post-trimming, as described above.

In order to achieve the above object, one aspect of the present invention is a delayed fracture characteristic evaluation method for evaluating a delayed fracture characteristic of a sheared end surface of a metal sheet made of a high-tensile steel sheet. The delayed fracture characteristic evaluation method includes: preparing a test piece having the sheared end surface from the metal sheet by performing shearing on the metal sheet; leaving the test piece under a hydrogen charging environment with a load stress being applied to the sheared end surface of the test piece thus prepared; and evaluating the delayed fracture characteristic of the sheared end surface relative to a shearing condition in the shearing.

The shearing condition as a variable should be, for example, a metal sheet restraint condition.

Advantageous Effects of Invention

In the aspect of the present invention, the delayed fracture characteristic of a sheared end surface which delayed fracture characteristic corresponds to the shearing condition in shearing is evaluated. Accordingly, with the aspect of the present invention, it is possible to evaluate the influence of a shearing condition at the time of forming of a post-trimmed portion on the delayed fracture characteristic of the sheared end surface, for example. Note that the aspect of the present invention is suitable for evaluation of a shearing condition for a sheared end surface by post-trimming performed after press forming. However, the present invention is also applicable to evaluation of a shearing condition for a sheared end surface by pre-trimming.

Here, the shearing condition at the time of trim forming of a post-trimmed portion changes depending on a restrained state or the like of a metal sheet at the time of shearing. With the aspect of the present invention, it is possible to evaluate a critical stress to delayed fracture or whether or not delayed fracture occurs, in consideration of the restrained state of a metal sheet at the time of shearing, for example.

As a result, with the aspect of the present invention, it is possible to further improve the delayed fracture characteristic at the time when a high-tensile steel sheet is applied to various components such as a panel component, a structure, and a frame component of an automobile, for example.

In addition, with the aspect of the present invention, a restrained state (shearing condition) at the post-trimming can be simulated easily by adjusting, by use of a spacer, the shearing condition in shearing to prepare a test piece. As a result, with the aspect of the present invention, it is possible to easily quantify the shearing condition and to easily reproduce a change (adjustment) of the shearing condition.

Brief Description of Drawings

FIG. 1 is a view to describe a processing flow of delayed fracture characteristic evaluation according to an embodiment of the present invention;

FIG. 2 is a view illustrating a case (a shearing condition A) where a sheet presser and a lower die including a lower blade make contact with a metal sheet but the sheet presser is distanced from a lower blade contact portion in a plan view;

FIG. 3 is a view to describe an exemplary configuration of a shearing device that simulates the shearing condition A and shears a flat metal sheet;

FIG. 4 is a view illustrating a case (a shearing condition B) where, in a shearing standby state, the sheet presser does not make contact with the metal sheet but the lower die makes contact with the metal sheet;

FIG. 5 is a view to describe an exemplary configuration of a shearing device that simulates the shearing condition B and shears a flat metal sheet;

FIG. 6 is a view illustrating a case (a shearing condition C) where, in a shearing standby state, the sheet presser makes contact with the metal sheet but the lower die does not make contact with the metal sheet in the vicinity of a lower blade contact portion;

FIG. 7 is a view to describe an exemplary configuration of a shearing device that simulates the shearing condition C and shears a flat metal sheet;

FIG. 8 is a view to describe an exemplary process of a program according to the embodiment of the present invention;

and

FIG. 9 is a top view illustrating post-trimming of a press-formed article in Examples.

Description of Embodiments

Next will be described embodiments of the invention with reference to the drawings.

(Outline)

First described is the outline of the present embodiment.

The inventors focused on a contact state of a sheet presser with a metal sheet as a material to be processed. A poor sheet restrained state at the time of shearing in post-trimming is classified to three patterns A, B, C as follows. The contact state of the sheet presser indicates a restrained state of the metal sheet by a lower die and the sheet presser.

Here, these poor sheet restrained states easily occur at the time of shearing (at the time of post-trimming) of a press-formed article. That is, the present invention is a technology suitable for evaluation of the delayed fracture characteristic of a sheared end surface formed by post-trimming.

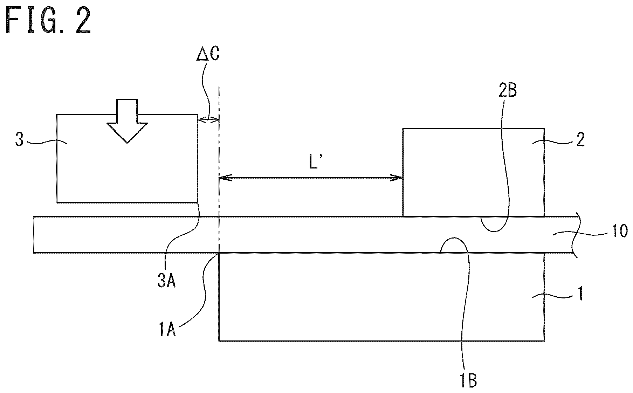

A: a case where a surface 2B of a sheet presser 2 and a surface 1B of a lower die 1 make contact with a metal sheet 10 and restrain the metal sheet 10, but the sheet presser 2 is distanced from a lower blade 1A in a plan view (see FIG. 2)

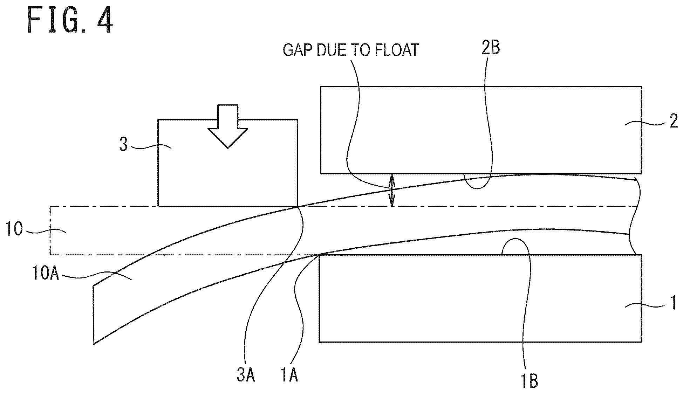

B: a case where the surface 2B of the sheet presser 2 does not make contact with the metal sheet 10 in a shearing standby state, but the surface 1B of the lower die 1 makes contact with the metal sheet 10 in the shearing standby state (see the metal sheet 10 indicated by an alternate long and short dash line in FIG. 4)

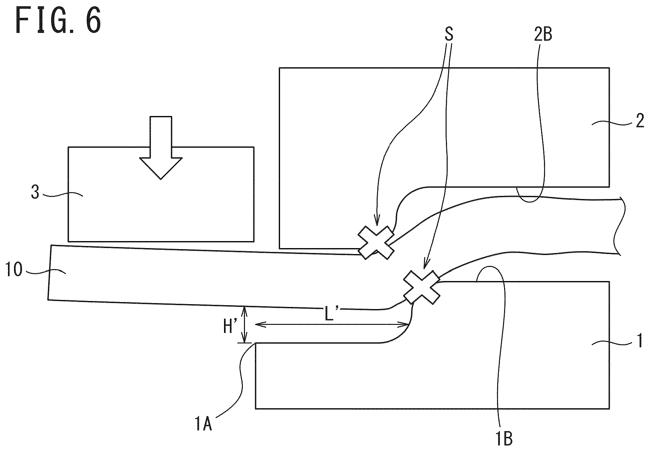

C: a case where the surface 2B of the sheet presser 2 makes contact with the metal sheet 10 in a shearing standby state, but the surface 1B of the lower die 1 does not make contact with the metal sheet 10 in the vicinity of the lower blade 1A (see in FIG. 6)

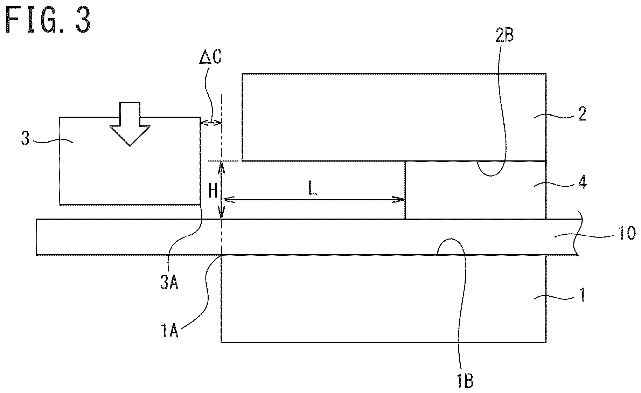

In order to simulate these poor contact states A, B, C (sheet restrained states), the inventors used a spacer 4 provided to be between the surface 1B of the lower die 1 and the surface 2B of the sheet presser 2 (see FIG. 3 and so on). Hereby, these poor contact states (sheet restrained states) were reproduced by adjusting the position or the thickness of the spacer 4. In addition, by adjusting a thickness H (a height H) of the spacer 4 and an offset distance L of the spacer 4 from the lower blade 1A in a plan view, a poor contact degree as a shearing condition was quantified.

Note that, in the present specification, the plan view refers to a case viewed from a shearing direction. Note that, in a case of shearing to prepare a test piece, the shearing direction is the same direction as the opposing direction where the surface 1B of the lower die 1 faces the surface 2B of the sheet presser 2.

Under various shearing conditions simulating the above poor contact states, shearing was performed on a flat metal sheet 10 to prepare test pieces. The test pieces thus prepared were left under a hydrogen charging environment for a predetermined time with an external stress being applied to the test pieces by four-point bending or the like. In the present embodiment, whether or not delayed fracture occurred was evaluated based on the leaving time.

Subsequently, with reference to the evaluation, a poor contact condition range of the sheet presser in which range no delayed fracture occurred relative to a particular stress application amount was determined for each of the types A, B, C. The particular stress application amount is an application amount applied to a sheared end surface after shearing, for example.

Then, under the found shearing condition causing no delayed fracture, a post-trimming step was performed on a press-formed article. Hereby, a press-formed article having a sheared end surface excellent in delayed fracture resistance was produced.

Note that the delayed fracture resistance of the sheared end surface should be evaluated separately in terms of working conditions other than the shearing condition.

Next will be described an example of the present embodiment with reference to the drawings.

(Delayed Fracture Characteristic Evaluation Method)

The present embodiment provides a delayed fracture characteristic evaluation method for evaluating a delayed fracture characteristic of a sheared end surface of the metal sheet 10. The present invention is more effective particularly in a case where the metal sheet 10 is a high-tensile steel sheet.

In the present embodiment, as a process of evaluating the delayed fracture characteristic of the metal sheet 10 targeted for evaluation, the delayed fracture characteristic evaluation method includes a test step of performing an actual experiment, and an evaluation step.

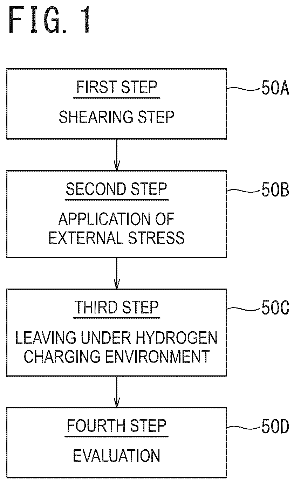

As illustrated in FIG. 1, the delayed fracture characteristic evaluation method of the present embodiment includes a first step 50A to a fourth step 50D. The first step 50A to the third step 50C correspond to the test step. The fourth step 50D corresponds to the evaluation step.

<First Step 50A>

The first step 50A is a step of preparing a test piece having a sheared end surface by performing shearing on the flat metal sheet 10.

In the present embodiment, various types of test pieces are prepared by adjusting the shearing condition for the shearing.

The present embodiment deals with a sheet restraint condition at the time of shearing as the shearing condition to be adjusted. In addition, a delayed fracture characteristic relative to the shearing condition may be evaluated with a shearing condition such as a clearance amount being taken as a variable.

In the present embodiment, the test piece is prepared by quantifying (parameterizing) the shearing condition by use of the spacer 4 for each type of the poor sheet restraint condition easily caused at the time of post-trimming. The test piece is formed into a short-strip shape so that the test piece is easily evaluable, for example.

The poor sheet restraint condition is classified to three types A, B, C, as described above.

[Preparation of Test Piece for Shearing Condition A (Type A)]

In a poor restraint condition as the shearing condition A, as illustrated in FIG. 2, the surface 2B of the sheet presser 2 and the surface 1B of the lower die 1, which face each other, make contact with the metal sheet 10 and firmly restrain the metal sheet 10. However, the sheet presser 2 is distanced from the position of the lower blade 1A in a plan view. Note that the surface 2B of the sheet presser 2 and the surface 1B of the lower die 1 are surfaces facing the metal sheet 10 restrained by them.

That is, in the restrained state illustrated in FIG. 2, in an actual production process of producing press-formed articles, such as mass production, the metal sheet 10 is restrained firmly by the surface 1B of the lower die 1 and the surface 2B of the sheet presser 2. However, in a plan view, an offset distance L' is provided between the sheet presser 2 and the lower blade 1A. Note that, in the present specification, an offset direction is defined as a direction in which an upper blade 3A faces the lower blade 1A in a plan view. The same shall apply hereinafter.

Thus, the state of FIG. 2 simulates a state where, in a shearing standby state, there is a region where the metal sheet 10 does not make contact with the surface 2B of the sheet presser 2 in the vicinity of a contact portion of the metal sheet 10 which contact portion makes contact with the lower blade 1A in a plan view. In this state, the offset distance L' from the lower blade 1A to the sheet presser 2 indicates a distance from the lower blade 1A by which distance the surface 2B of the sheet presser 2 does not make contact with the metal sheet 10 in a plan view. The offset distance L' can be a variable of a poor contact degree (restraint condition).

In order to simulate a poor contact state (restraint condition), the spacer 4 is used to reproduce the poor contact state (see FIG. 3). A thickness H and a position of the spacer 4 are adjusted to quantify the poor contact degree. The position is adjusted by adjusting the offset distance L. In the shearing conditions B, C, respective poor contact degrees are also quantified by use of the spacer 4.

It is desirable that a metal material that can ignore deformation of the spacer 4 be preferably used as the material of the spacer 4 to be used. However, as the material of the spacer 4, a material such as hard rubber is also usable other than the above. The spacer 4 has a flat sheet shape having a thickness uniform along the offset direction.

FIG. 3 illustrates a schematic view of a shearing device to reproduce the situation of the shearing condition A in shearing to prepare a test piece.

The shearing device illustrated in FIG. 3 includes the lower die 1 including the lower blade 1A provided in a shoulder portion of the lower die 1, an upper die 3 including the upper blade 3A provided in a shoulder portion of the upper die 3, and the sheet presser 2. The lower die 1 is a die, for example, and the upper die 3 is a punch, for example. The shearing device is configured such that the surface 1B of the lower die 1 and the surface 2B of the sheet presser 2 are arranged to restrain the metal sheet 10 at the time of shearing. The shearing device is configured to shear the metal sheet 10 by moving the upper blade 3A relative to the lower blade 1A in a shearing direction with the metal sheet 10 being restrained. At this time, a clearance $\Delta C$ between the upper blade 3A and the lower blade 1A is set to a predetermined value, and shearing is performed.

Here, the shearing device illustrated in FIG. 3 is a shearing device configured to prepare a test piece. Accordingly, as illustrated in FIG. 3, the surface 1B of the lower die 1 and the surface 2B of the sheet presser 2, which abut with the flat metal sheet 10, are both flat surfaces.

In addition, the spacer 4 is inserted between the metal sheet 10 and the surface 2B of the sheet presser 2 in the shearing device illustrated in FIG. 3. The spacer 4 is a flat-shaped member. The spacer 4 can approach and separate from the lower blade 1A along the surface 2B of the sheet presser 2.

In the shearing device illustrated in FIG. 3, at least either the offset distance L of the spacer 4 from the lower blade 1A or the height H of the spacer 4 in a plan view is taken as a variable (an adjustment amount) in the shearing condition A. That is, based on the offset distance L and the height H of the spacer 4, how far the sheet presser 2 is from the metal sheet 10 in the vicinity of the contact portion of the lower blade 1A with the metal sheet is determined. By adjusting the offset distance L and the height H of the spacer 4 as the variable in the shearing condition A, test pieces with respective variable values in the shearing condition A can be prepared. Note that the unit of the offset distance L and the height H is [mm].

Here, in shearing under the shearing condition A, the thickness H of the spacer 4 is preferably equal to or more than 0.5 mm, for example, in consideration of the influence of poor pressing by the sheet presser. An upper limit of the thickness H is not limited in particular but is set to 10 mm, for example.

In order to determine a poor contact state, the offset distance L of the spacer 4 is preferably set to be equal to or more than 1 mm, for example.

[Preparation of Test Piece for Shearing Condition B (Type B)]

A poor restraint condition of the shearing condition B is a case where the surface 2B of the sheet presser 2 does not make contact with the metal sheet 10 in a shearing standby state, but the surface 1B of the lower die 1 makes contact with the metal sheet 10 in the shearing standby state, as illustrated in FIG. 4. The metal sheet 10 indicated by an alternate long and short dash line is a shearing standby state. A metal sheet 10A indicated by a continuous line is a state at the time of shearing.

The restrained state illustrated in FIG. 4 is caused due to an insufficient sheet-pressing load in an actual production process of press-formed articles such as mass production. That is, the restrained state illustrated in FIG. 4 simulates a state where the sheet presser 2 floats from the metal sheet 10 at a stand-by position. FIG. 4 simulates a state where the metal sheet 10 is sheared by the lower blade 1A and the upper blade 3A from that state. In the restrained state in FIG. 4, a gap (opposed distance) between the surface 2B of the sheet presser 2 and the metal sheet 10 in the shearing standby state can be a variable of a poor contact degree corresponding to the float of the sheet presser 2.

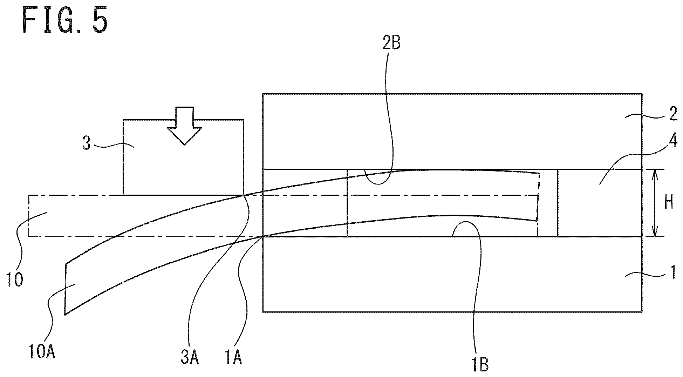

FIG. 5 illustrates a schematic view of a shearing device to reproduce the situation of the shearing condition B in shearing to prepare a test piece. In FIG. 5, the metal sheet 10 indicated by an alternate long and short dash line indicates a shearing standby state, and the metal sheet 10A indicated by a continuous line indicates a state at the time of shearing.

The shearing device illustrated in FIG. 5 includes the lower die 1 including the lower blade 1A provided in a shoulder portion of the lower die 1, the upper die 3 including the upper blade 3A provided in a shoulder portion of the upper die 3, and the sheet presser 2. The lower die 1 is a die, for example, and the upper die 3 is a punch, for example. The shearing device is configured such that the surface 1B of the lower die 1 and the surface 2B of the sheet presser 2 are arranged to restrain the metal sheet 10 at the time of shearing. The upper blade 3A is moved relative to the lower blade 1A in the shearing direction with the sheet being restrained. Hereby, the metal sheet 10 is sheared. At this time, the clearance $\Delta C$ between the upper blade 3A and the lower blade 1A is set to a predetermined value, and shearing is performed.

Here, the shearing device illustrated in FIG. 5 is a shearing device configured to prepare a test piece. On this account, as illustrated in FIG. 5, the surface 1B of the lower die 1 and the surface 2B of the sheet presser 2, which abut with the flat metal sheet 10, are both flat surfaces.

Besides, in the shearing device illustrated in FIG. 5, in order to reproduce the state of the shearing condition B, the spacer 4 having the thickness H thicker than the thickness of the metal sheet 10 is inserted between the surface 2B of the sheet presser 2 and the surface 1B of the lower die 1. The spacer 4 is placed at a position that does not make contact (interfere) with the metal sheet 10.

The shearing device illustrated in FIG. 5 is a device that can simulate how much the metal sheet 10 springs up at the time of shearing, by adjusting the height H of the spacer 4. That is, the thickness H of the spacer 4 is adjusted as a variable of a poor contact degree indicating how much the sheet presser 2 floats.

In shearing under the shearing condition B, the thickness H of the spacer 4 is preferably thicker than the thickness of the metal sheet 10 by 0.2 mm or more in consideration of the influence of poor pressing by the sheet presser 2. However, a case where the thickness H of the spacer 4 is equal to the thickness of the metal sheet may be also included as evaluation of a normal restrained state.

[Preparation of Test Piece for Shearing Condition C (Type C)]

A poor restraint condition of the shearing condition C is a case where the surface 2B of the sheet presser 2 makes contact with the metal sheet 10, but the surface 1B of the lower die 1 does not make contact with the metal sheet 10 in the vicinity of the lower blade 1A, as illustrated in FIG. 6. In FIG. 6, reference sign H' indicates a gap amount between the surface 1B of the lower die 1 and the metal sheet 10 in the vicinity of the lower blade 1A. Reference sign S in FIG. 6 indicates a portion of each of the surface 1B of the lower die 1 and the surface 2B of the sheet presser 2 which portion makes contact with the metal sheet 10 in the shearing standby state. Here, in FIG. 6, a surface of a portion of each of the surface 1B of the lower die 1 and the surface 2B of the sheet presser 2 which portion restrains the metal sheet 10 is not flat. The reason is as follows. That is, FIG. 6 simulates a state where the metal sheet 10 after press forming is restrained. That is, FIG. 6 is a schematic view illustrating a state where the surface 1B of the lower die 1 and the surface 2B of the sheet presser 2 have shapes following a metal sheet shape at a restraint position of a press-formed article to be restrained at the time of shearing.

That is, in the state illustrated in FIG. 6, in an actual production process such as mass production, the metal sheet 10 is restrained firmly between the surface 1B of the lower die 1 and the surface 2B of the sheet presser 2. However, FIG. 6 simulates a case where a portion of a component to be restrained has a three-dimensional shape. FIG. 6 simulates a state where a gap is formed between the surface 2B of the sheet presser 2 and the metal sheet 10 or between the surface 1B of the lower die 1 and the metal sheet 10. That is, the state illustrated in FIG. 6 simulates a state where, in a shearing standby state, the metal sheet 10 does not make contact with the surface 1B of the lower die 1 in the vicinity of the lower blade 1A due to errors or the like in the forming.

In the state in FIG. 6, in a plan view, an offset distance L' from a contact portion of the lower blade 1A to the contact portion S of the surface 1B of the lower die 1 with the metal sheet 10, and how far the surface 1B of the lower die 1 is from the metal sheet 10 in the vicinity of the contact portion S of the upper blade 3A can be variables of the poor contact degree.

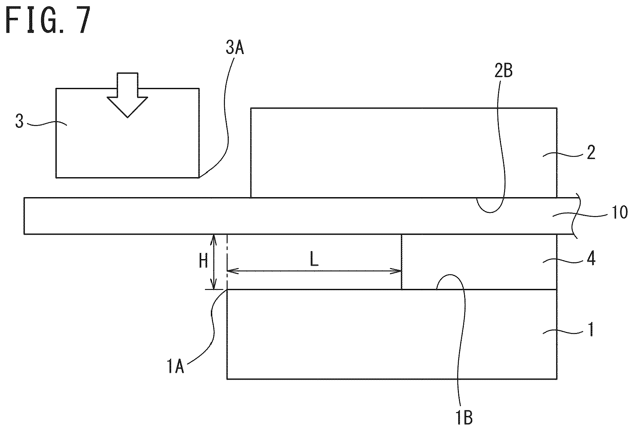

FIG. 7 illustrates a schematic view of a shearing device to reproduce the situation of the shearing condition C in shearing to prepare a test piece.

The shearing device illustrated in FIG. 7 includes the lower die 1 including the lower blade 1A provided in a shoulder portion of the lower die 1, the upper die 3 including the upper blade 3A provided in a shoulder portion of the upper die 3, and the sheet presser 2. The lower die 1 is a die, for example, and the upper die 3 is a punch, for example. The shearing device is configured such that the surface 1B of the lower die 1 and the surface 2B of the sheet presser 2 are arranged to restrain the metal sheet 10 in its thickness direction at the time of shearing. The upper blade 3A is moved relative to the lower blade 1A in the shearing direction with the metal sheet 10 being restrained. Hereby, the metal sheet 10 is sheared. At this time, the clearance $\Delta C$ between the upper blade 3A and the lower blade 1A is set to a predetermined value, and shearing is performed.

Here, the shearing device illustrated in FIG. 7 is a shearing device configured to prepare a test piece.

Note that, in shearing for preparing a test piece, the metal sheet 10 has a flat shape. Accordingly, the surface 1B of the lower die 1 and the surface 2B of the sheet presser 2, illustrated in FIG. 7, are flat surfaces.

In the shearing device illustrated in FIG. 7, the spacer 4 is inserted into at least part of a space between the surface 1B of the lower die 1 and the metal sheet 10 to reproduce the situation of the shearing condition C.

In this state, the offset distance L of the spacer 4 from the lower blade 1A and the thickness H of the spacer 4 are adjusted in a plan view. Hereby, how far the lower die 1 is from the metal sheet 10 in the vicinity of the contact portion of the lower blade 1A is expressed. That is, the offset distance L and the thickness H can be adjusted as variables of the poor contact degree in the shearing condition C.

Here, in shearing under the shearing condition C, the thickness H of the spacer 4 is preferably equal to or more than 0.5 mm in consideration of the influence of poor pressing by the sheet presser. The offset distance L of the spacer 4 is preferably equal to or more than 1 mm in consideration of the influence of poor pressing by the sheet presser.

In the first step 50A, a plurality of test pieces is prepared individually for each of the shearing conditions A, B, C.

<Second Step 50B>

The second step 50B is a step of restraining each of various test pieces prepared in the first step 50A with a predetermined external load stress being applied to a sheared end surface thereof. The stress is applied by applying a tensile stress or a bending stress, for example. In this case, a method for applying a bending stress by use of a jig is particularly desirable from the viewpoint of convenience. A well-known method should be employed as the method for applying a bending stress.

For example, a stress is applied to a test piece having a sheared end surface by four-point bending. It is desirable that the stress be adjusted by a strain gauge attached to the metal sheet 10 in advance. A load applied by axial tension or the like is also usable. Here, it is preferable that a plurality of test pieces be prepared by changing a load stress by a sufficiently small span of 100 MPa or the like, for example, for each variable (adjustment amount) of the shearing condition.

<Third Step 50C>

In the third step 50C, the test piece restrained in a state where an external load stress is applied thereto in the second step 50B is left under a predetermined hydrogen charging environment for a predetermined time. In the third step 50C, the occurrence of fracture in the test piece in that state is evaluated.

At this time, it is preferable that the hydrogen charging environment and the leaving time be determined to achieve a hydrogen charging amount equivalent to a hydrogen amount estimated to enter a material targeted for evaluation under an environment under which the material is actually used.

The test piece is left under the hydrogen charging environment such that the test piece is immersed in a bathtub in which acid liquid such as hydrochloric acid or $NH_4SCN$ aqueous solution is stored, for example. The concentration of the acid liquid and the immersion time are determined to satisfy a condition under which a predetermined hydrogen amount as an allowable upper limit enters the test piece.

Then, each of the test pieces prepared in the first step 50A and the second step 50B is repeatedly subjected to the third step 50C and the fourth step 50D while the condition of the load stress to be applied is changed. By selecting a plurality of application levels of the external load stress, it is possible to determine a load-stress limit value that causes no delayed fracture, for each variable of the shearing condition. The load-stress limit value is also referred to as a delayed fracture critical stress.

<Fourth Step 50D>

In the fourth step 50D, data on a plurality of combinations of the variables of the shearing condition in the first step 50A with the load-stress limit values (delayed fracture critical stresses) that cause no delayed fracture, found in the third step 50C, is acquired. The acquisition of the data on the plurality of combinations is performed individually for each of the shearing conditions A, B, C.

With reference to the data on the plurality of combinations, correlation information on a correlation between a variable of the shearing condition and its corresponding load-stress limit value is found for each of the shearing conditions A, B, C.

The correlation information should be found by a well-known computing method. The correlation information is, for example, a multiple regression model, a model equation by machine learning, or the like. The data on the plurality of combinations may be employed as the correlation information.

By finding the correlation information in advance, it is possible to predict whether or not delayed fracture occurs in an actual press-formed article or a press-formed article shape to be formed, for each shearing condition.

More specifically, with reference to the correlation information, it is predicted whether or not delayed fracture occurs due to a shearing condition at the time of trimming and a load stress applied after trimming. The load stress is a residual stress at the time when press forming is performed on the metal sheet 10 after shearing, for example. Alternatively, the load stress may be a load stress after trimming, including an assembly stress of a resultant press-formed component in addition to a residual stress at the time when press forming is performed on the metal sheet 10. The load stress after trimming is also referred to as a forming stress.

On the other hand, in a case where an upper limit of the load stress after the sheared end surface is formed (after post-trimming) is determined, it is possible to perform the prediction by finding a shearing condition range applicable to post-trimming.

As described above, a component shape or a shearing condition for shearing in post-trimming should be designed not to cause delayed fracture, by determining in advance the risk of delayed fracture in a post-trimmed portion. In this case, it is possible to manufacture a press-formed article having a sheared end surface excellent in delayed fracture resistance.

Note that, in a case where one press-formed article includes both a post-trimmed portion and a pre-trimmed portion, the pre-trimmed portion may be also evaluated separately as well as the evaluation of the post-trimmed portion.

Here, a residual stress of forming after trimming, or the like, in a press-formed article can be calculated by a normal forming analysis by CAE. In a case where a plurality of portions on a sheared end surface has different shearing conditions, whether or not delayed fracture occurs should be individually evaluated for each of the plurality of portions or a representative portion among them with the shearing condition of the portion being taken as a variable.

(Press-Formed Article Production Method)

In a case where a press-formed article is produced by a shearing step (a post-trimming step) of performing shearing on a pressed component formed by pressing, the press-formed article should be produced as follows.

That is, a shearing condition in the post-trimming step which condition is evaluated to cause no delayed fracture in the press-formed article is determined by the delayed fracture characteristic evaluation method of the present embodiment. Then, shearing for post-trimming is performed under the determined shearing condition to produce the press-formed article.

Alternatively, a limit value (range) of a variable in the shearing condition which variable is allowable at the time when a target press-formed article is produced is found by the delayed fracture characteristic evaluation method of the present embodiment. Then, the variable in the shearing condition of shearing for post-trimming is adjusted to be equal to or less than the limit value (range) thus found.

Here, in a case where shearing (post-trimming) is performed after press forming, the external load stress is a residual stress caused by press forming further performed after shearing for post-trimming, for example. The external load stress is also an assembly stress to be caused at the time when a press-formed component is assembled to other structures, for example.

(Program)

The following describes an example of a program to be used for the above-mentioned delayed fracture characteristic evaluation method.

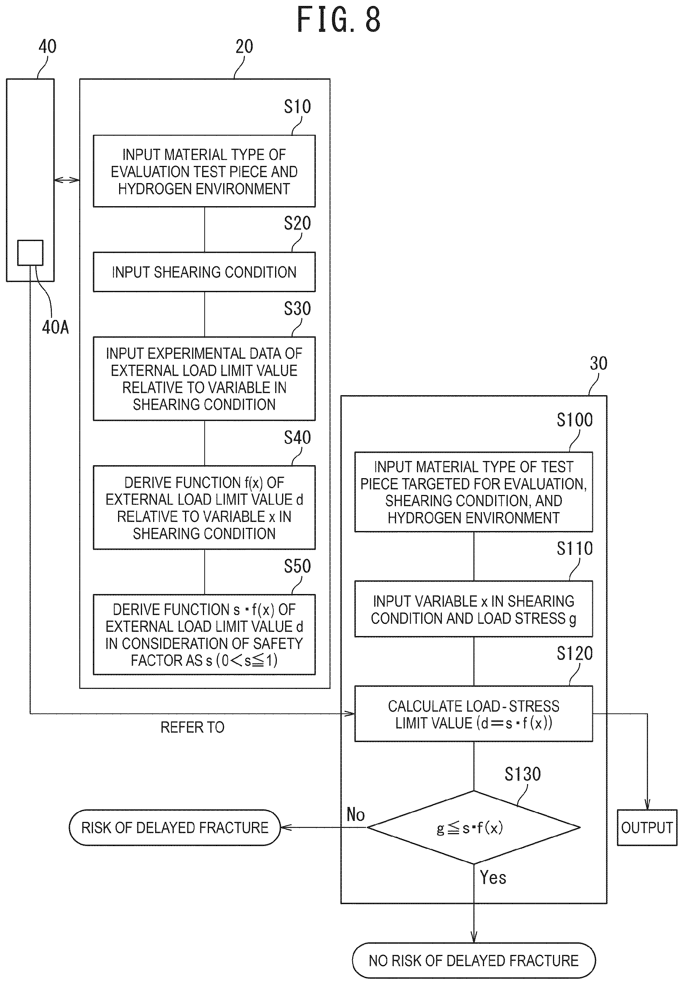

The program in the present embodiment causes a storage unit 40 to store correlation information 40A on a correlation between a variable in a shearing condition at the time of shearing and an external load-stress limit value (a delayed fracture critical stress) applicable to a sheared end surface (see FIG. 8). The variable of the shearing condition is the height H or the offset distance L of the spacer 4 for each shearing condition. That is, the correlation information is found individually for each of the shearing conditions A, B, C and stored.

The correlation information 40A should be found by the process of the afore-mentioned delayed fracture characteristic evaluation method. The program in the present embodiment is a program for executing a process of finding, with reference to the correlation information 40A, a load-stress limit value applicable after shearing which load-stress limit value corresponds to an input variable in the shearing condition at the time of shearing.

Another example of the program is a program causing a computer to execute a first processing step and a second processing step. The first processing step is a step of executing a process of finding, with reference to the correlation information 40A, a load-stress limit value corresponding to an input variable in the shearing condition at the time of shearing. The second processing step is a step of executing a process of determining whether or not delayed fracture occurs, based on a forming stress as a load stress caused at the time when press forming is performed on the metal sheet 10 into a press-formed article shape and the load-stress limit value found in the first processing step.

Next will be described an exemplary process executed by the afore-mentioned program of the evaluation method, with reference to FIG. 8. By performing evaluation by the process illustrated in FIG. 8, it is possible to more effectively evaluate delayed fracture.

In the example illustrated in FIG. 8, a correlation information calculating unit 20, an evaluation main unit 30, and the storage unit 40 are provided. Programs for executing respective processes of the correlation information calculating unit 20 and the evaluation main unit 30 are stored in the storage unit 40 such as a RAM or a ROM of the computer and executed by the computer.

<Storage Unit 40>

The storage unit 40 includes a recording medium such as a database.

The processes from the first step 50A to the fourth step 50D are repeated while a material condition of the metal sheet 10, a condition of the hydrogen environment, a shearing condition, and a forming strain amount are changed variously. Hereby, data on a load stress d found for the variable in the shearing condition with a testing condition being taken as a variable is found for each material condition of the metal sheet 10, each condition of the hydrogen environment, and each shearing condition at the time of shearing and is stored in the storage unit 40. Besides, the correlation information 40A found as above is also stored in the storage unit 40. The correlation information 40A may be stored in the same medium as a storage area of the programs.

<Correlation Information Calculating Unit 20>

First, in step S10, the correlation information calculating unit 20 urges input of a condition of the type (steel grade and thickness H) of a material, and a condition of a hydrogen environment (acid degree and leaving time) as a condition of delayed fracture, as a basic condition of evaluation. After that, the correlation information calculating unit 20 acquires the input in response to an input operation by an operator.

Subsequently, in step S20, the correlation information calculating unit 20 urges input of a variable in the shearing condition at the time of shearing and acquires the input in response to an input operation by the operator. The variable in the shearing condition is the height H or the offset distance L of the spacer 4, for example.

Subsequently, in step S30, a data aggregate of load stresses corresponding to respective variables of each shearing condition and satisfying the conditions input in step S10 and step 20 is acquired from the storage unit 40. The data aggregate is a group of pieces of data (variables in the shearing condition, load stresses).

The data aggregate is collected individually for each of the shearing conditions A, B, C.

Alternatively, the correlation information calculating unit 20 urges input of a data aggregate of load stresses corresponding to respective variables in each shearing condition and found by the test and acquires input information in response to an input operation by the operator. The acquired data is stored in the storage unit 40.

Subsequently, in step S40, the correlation information calculating unit 20 refers to the data aggregate of load stresses corresponding to respective variables in the shearing condition, acquired in step S30, and executes a correlation detection process based on a well-known processing equation. More specifically, in step S40, the correlation information calculating unit 20 executes arithmetic processing to find a load stress d as a function f(x) with a variable x in the shearing condition as a variable.

Subsequently, in step S50, the function of the load stress d, found in step S40, is transformed into an equation in consideration of a safety factor s (: $0 < s \leq 1$) as follows.

$$d = s \cdot f(x)$$

Then, information (the correlation information 40A) on the function of the load stress d is stored in the storage unit 40 with a testing condition as a key.

<Evaluation Main Unit 30>

First, in step S100, the evaluation main unit 30 urges input of a condition of the type (steel grade and the thickness H) of a material of an evaluation target, and a condition of a hydrogen environment (acid degree and leaving time) as a condition of delayed fracture. The evaluation main unit 30 acquires the input in response to an input operation by the operator.

Subsequently, in step S110, the evaluation main unit 30 urges input of a value of the variable x in the shearing condition at the time of shearing and a load stress g applied to the metal sheet 10 after a sheared end surface is formed. The evaluation main unit 30 acquires the input in response to an input operation by the operator. The evaluation main unit 30 may acquire these pieces of information from analysis information acquired by CAE analysis.

In step S120, the evaluation main unit 30 acquires, from the storage unit 40, the correlation information 40A including the function "s·f(x)" for the load stress d satisfying the conditions input in step S100. Then, a load-stress limit value d corresponding to the input value of the variable x in the shearing condition is found. A process of outputting the load-stress limit value d may be executed.

In step S130, the load-stress limit value d (= s·f(x)) found in step S120 is compared with the load stress g applied to the metal sheet 10 after the sheared end surface is formed. Then, the evaluation main unit 30 determines whether or not there is a risk of delayed fracture, based on the comparison. The load stress g is a forming stress, for example.

Here, in step S130 in FIG. 8, the evaluation main unit 30 determines whether or not there is a risk of delayed fracture, but a margin (= d - g) of the load stress to delayed fracture may be output in addition.

In the above description, the correlation information calculating unit 20 finds d = f(x) or d = s·f(x) for the variable x in the shearing condition, as the correlation information 40A. Alternatively, as the correlation information 40A, x = h(d) as a limit value of the variable x in the shearing condition may be found with the load stress d being as a variable. In this case, in step S120, with reference to the correlation information 40A, the correlation information calculating unit 20 finds a limit value in the shearing condition which limit value corresponds to the load stress d to be applied after the sheared end surface is formed. Then, in step S130, the value of the variable in the shearing condition at the time of shearing is compared with the found limit plastic strain amount x.

Then, the evaluation main unit 30 determines whether or not there is a risk of delayed fracture, based on the comparison.

(Effects)

In the present embodiment, it is possible to set a critical stress for delayed fracture in consideration of the shearing condition in post-trimming of a press-formed article or determine whether delayed fracture occurs or not. As a result, in the present embodiment, it is possible to improve the delayed fracture characteristic at the time when a high-tensile steel sheet is applied to various components such as a panel component, a structure, and a frame component of an automobile, for example.

(Others)

This disclosure can also take the following configurations.

(1) Disclosure 1 is a delayed fracture characteristic evaluation method for evaluating a delayed fracture characteristic of a sheared end surface of a metal sheet made of a high-tensile steel sheet. The delayed fracture characteristic evaluation method includes: preparing a test piece having the sheared end surface from the metal sheet by performing shearing on the metal sheet; leaving the test piece under a hydrogen charging environment with a load stress being applied to the sheared end surface of the test piece thus prepared; and evaluating the delayed fracture characteristic of the sheared end surface relative to a shearing condition in the shearing.

(2) In Disclosure 2, the test piece includes a plurality of test pieces for different shearing conditions in the shearing, and the delayed fracture characteristic of the metal sheet is evaluated for each of the shearing conditions.

(3) In Disclosure 3, the delayed fracture characteristic evaluation method further includes: finding, for the shearing condition, a load-stress limit value causing no delayed fracture, under the hydrogen charging environment, on the sheared end surface after the shearing. The delayed fracture characteristic of the sheared end surface is evaluated based on the found load-stress limit value.

(4) In Disclosure 4, the delayed fracture characteristic evaluation method further includes: finding, in advance, a correlation between the shearing condition and the load-stress limit value; and evaluating an allowable load stress for the shearing condition based on the correlation.

(5) In Disclosure 5, the shearing condition is a metal sheet restraint condition in the shearing.

(6) In Disclosure 6, the shearing is performed by shearing the metal sheet by a lower blade and an upper blade with the metal sheet being restrained by a lower die and a sheet presser, the lower die including the lower blade provided in a shoulder portion of the lower die. A spacer is inserted between the metal sheet to be restrained and the sheet presser. The shearing condition is changed by changing at least one condition out of an offset distance from the lower blade to the spacer and a thickness of the spacer.

(7) In Disclosure 7, the shearing is performed by shearing the metal sheet by a lower blade and an upper blade with the metal sheet being restrained by a lower die and a sheet presser, the lower die including the lower blade provided in a shoulder portion of the lower die. An opposed distance between the lower die and the sheet presser restraining the metal sheet is defined by inserting a spacer thicker than a thickness of the metal sheet between the lower die and the sheet presser at a position where the spacer does not make contact with the metal sheet. The shearing condition is changed by changing the thickness of the spacer.

(8) In Disclosure 8, the shearing is performed by shearing the metal sheet by a lower blade and an upper blade with the metal sheet being restrained by a lower die and a sheet presser, the lower die including the lower blade provided in a shoulder portion of the lower die. A spacer is inserted between the metal sheet to be restrained and the lower die. The shearing condition is changed by changing at least one condition out of an offset distance from the lower blade to the spacer and a thickness of the spacer.

(9) Disclosure 9 is a delayed fracture prediction method for predicting whether or not delayed fracture occurs by shearing in a press-formed article produced by performing the shearing on a pressed component produced by performing press forming on a metal sheet. The delayed fracture prediction method includes: finding, in advance, a correlation between a shearing condition in the shearing and a load-stress limit value based on the delayed fracture characteristic evaluation method of this disclosure; and predicting, based on the correlation, whether or not delayed fracture occurs in the press-formed article due to the shearing on the pressed component.

(10) In Disclosure 10, the shearing condition is a metal sheet restraint condition in the shearing.

(11) Disclosure 11 is a program causing: a storage unit to store correlation information on a correlation between a shearing condition in shearing and a load-stress limit value, the correlation being found based on the delayed fracture characteristic evaluation method of this disclosure; and a computer to execute a process of finding, with reference to the correlation information thus stored, an applicable load-stress limit value corresponding to an input shearing condition

(12) Disclosure 12 is a program for predicting whether or not delayed fracture occurs by shearing in a press-formed article produced by performing the shearing on a pressed component produced by performing press forming on a metal sheet, the program causing: a storage unit to store correlation information on a correlation between a shearing condition in the shearing and a load-stress limit value, the correlation being found based on the delayed fracture characteristic evaluation method of this disclosure; and a computer to execute a first processing step of finding, with reference to the correlation information thus stored, a load-stress limit value corresponding to an input shearing condition, and a second processing step of determining whether or not delayed fracture occurs, based on a forming stress as a load stress applied to a sheared end surface formed by the shearing performed on the pressed component after the shearing and the load-stress limit value found in the first processing step.

(13) In Disclosure 13, the shearing condition is a metal sheet restraint condition in the shearing.

(14) Disclosure 14 is a press-formed article production method for producing a press-formed article by performing shearing on a pressed component produced by performing press forming on a metal sheet. The press-formed article production method includes: determining a shearing condition evaluated to cause no delayed fracture in the press-formed article, by the delayed fracture characteristic evaluation method of this disclosure; and performing the shearing under the shearing condition thus determined.

(15) In Disclosure 15, the shearing condition is a metal sheet restraint condition in the shearing.

(16) Disclosure 16 is a shearing device for performing shearing on a metal sheet to prepare a test piece to evaluate a delayed fracture characteristic, and the shearing device includes: a lower die including a lower blade provided in a shoulder portion of the lower die; a sheet presser; and an upper die including an upper blade provided in a shoulder

# EP 4 692 755 A1

portion of the upper die. The shearing device is configured to shear the metal sheet by the lower blade and the upper blade with the metal sheet being restrained by the lower die and the sheet presser. The shearing device further includes a spacer inserted between the metal sheet and the sheet presser.

(17) Disclosure 17 is a shearing device for performing shearing on a metal sheet to prepare a test piece to evaluate a delayed fracture characteristic, and the shearing device includes: a lower die including a lower blade provided in a shoulder portion of the lower die; a sheet presser; and an upper die including an upper blade provided in a shoulder portion of the upper die. The shearing device is configured to shear the metal sheet by the lower blade and the upper blade with the metal sheet being restrained by the lower die and the sheet presser. The shearing device further includes a spacer inserted between the lower die and the sheet presser at a position where the spacer does not make contact with the metal sheet. The spacer has a thickness thicker than a thickness of the metal sheet.

(18) Disclosure 18 is a shearing device for performing shearing on a metal sheet to prepare a test piece to evaluate a delayed fracture characteristic, and the shearing device includes: a lower die including a lower blade provided in a shoulder portion of the lower die; a sheet presser; and an upper die including an upper blade provided in a shoulder portion of the upper die. The shearing device is configured to shear the metal sheet by the lower blade and the upper blade with the metal sheet being restrained by the lower die and the sheet presser. The shearing device further includes a spacer inserted between the metal sheet and the lower die.

Examples

Next will be described Examples based on the present embodiment.

In Examples, a metal sheet targeted for evaluation is a sample A made of steel having a thickness of 1.4 mm and a strength of 1470 MPa. However, the present invention is not limited to such a metal sheet. The present invention is preferably applicable to a metal material such as an ultra-high tensile strength steel having a tensile strength equal to or more than 980 MPa that is highly likely to cause delayed fracture on a sheared end surface.

In the present embodiment, by shearing by a setup of dies described below, a test piece having a length of 120 mm and having a linear sheared end surface was prepared as a target for evaluation. A clearance between the upper blade 3A and the lower blade 1A at the time of shearing was 12% of the thicknesses of the test piece. Note that, shearing under a normal shearing condition with the use of no spacer 4 was also performed for comparison. The normal shearing condition is a condition under which a metal sheet was restrained by the lower die and the sheet presser making surface contact with the metal sheet.

(Preparation of Test Piece in Example A)

In order to reproduce the situation of the shearing condition A, shearing was performed with a shearing device configured such that the spacer 4 was inserted between the surface 2B of the sheet presser 2 and the metal sheet 10, as illustrated in FIG. 3.

In this state, the offset distance L of the spacer 4 from the lower blade 1A and the thickness H of the spacer 4 were adjusted as variables. A 590MPa-grade steel sheet material was used as the material of the spacer 4.

In Example A, the height H of the spacer 4 was fixed at 2 mm. The offset distance L of the spacer 4 from the lower blade 1A was changed to 2 mm, 4 mm, and 6 mm as the variable in the shearing condition A. Hereby, the test piece for Example A was prepared.

(Preparation of Test Piece in Example B)

In order to reproduce the situation of the shearing condition B, a device provided with the spacer 4 having a thickness thicker than the thickness of the metal sheet 10 and provided between the surface 2B of the sheet presser 2 and the surface 1B of the lower die 1 was used, as illustrated in FIG. 5. The spacer 4 was provided at a position where the spacer 4 had no contact with the metal sheet 10. In a shearing standby state, shearing was performed with the metal sheet 10 having no contact with the surface 2B of the sheet presser 2.

In Example B, the thickness H of the spacer 4 was adjusted to adjust the shearing condition. In Example B, the thickness H of the spacer 4 was adjusted to 1.9 mm, 2.4 mm, and 3.4 mm. These thicknesses could cause a gap between the metal sheet 10 and the surface 2B of the sheet presser 2 to be 0.5 mm, 1.0 mm, and 2.0 mm, respectively.

(Preparation of Test Piece in Example C)

In order to reproduce the situation of the shearing condition C, shearing was performed with a shearing device configured such that the spacer 4 was inserted into at least part of a space between the surface 1B of the lower die 1 and the metal sheet 10, as illustrated in FIG. 7. In this state, the offset distance L of the spacer 4 from the lower blade 1A and the thickness H of the spacer 4 were adjusted.

In Example C, the thickness H of the spacer 4 was set to 2 mm, and the offset distance L of the spacer 4 from the lower blade 1A was changed to 2 mm, 4 mm, and 6 mm.

(Evaluation of Sheared End Surface of Test Piece)

The evaluation here was performed by visually observing a sheared surface.

In each condition under the shearing condition A, the sheared end surface was generally the same as the state of the sheared end surface under the normal shearing condition, and there was little influence of the spacer 4.

In each condition under the shearing condition B, due to the influence of the metal sheet 10 being released from the sheet presser 2, the metal sheet 10 was sheared while the metal sheet 10 sprang up toward the sheet presser 2. Due to the influence, a sheared surface was not vertical to its thickness but was inclined from the thickness. Besides, the sheared end surface partially had a secondary sheared surface in its extending direction, and thus, the sheared end surface was in an unstable condition. As the height H of the spacer 4 was larger, the tendency appeared more strongly.

In each condition under the shearing condition C, the metal sheet 10 was sheared while the metal sheet 10 was deformed to bend toward the lower die 1. Due to the influence, the sheared end surface had an end surface characteristic extending in a direction toward the lower die 1. Note that, in a case where the spacer 4 was distanced by 6 mm or more, the metal sheet 10 had a plastic deformation bending toward the lower die 1, and it was assumed that this was too severe as the shearing condition.

(Application of Load)

Subsequently, a stress was applied to each test piece thus prepared by four-point bending. As the stress, a strain was measured by a strain gauge attached to the metal sheet 10 in advance. Then, the stress was measured and adjusted by multiplying a strain amount by 205 GPa as Young's modulus. Here, a plurality of test pieces was prepared for the same shearing condition by changing a load stress at 100-MPa intervals.

(Leaving Under Hydrogen Charging Environment)

Subsequently, each test piece to which a load was applied was left under a hydrogen charging environment, and whether or not delayed fracture occurred was investigated. That is, a test piece in a stress applied state was immersed in hydrochloric acid of pH 3.5 for 96 h, and in a case where fracture occurred on a sheared end surface after immersion, it was determined that delayed fracture occurred.

(Delayed Fracture Characteristic Evaluation)

Here, under the normal shearing condition in which no spacer 4 was provided, the critical stress for delayed fracture was 1200 MPa. Herein, this value is taken as an evaluation reference.

[Example A]

Table 1 shows a result of Example A in a case of the spacer 4 with a height H of 2 mm.

[Table 1]

| H [mm] | L[mm] | Delayed fracture critical stress [MPa] |
|--------|-------|----------------------------------------|
|        | 0.5   | 1200                                   |
|        | 1     | 1100                                   |
| 2      | 2     | 1000                                   |
|        | 4     | 1000                                   |
|        | 6     | 1000                                   |

As can be seen from Table 1, in a case where the height H of the spacer 4 was 2 mm, when the offset distance L from the lower blade 1A was 0.5 mm, the delayed fracture critical stress was the same as the normal shearing condition with the use of no spacer 4. However, it was found that, in a case where the offset distance L was equal to or more than 1 mm, the delayed fracture critical stress tended to decrease.

Table 2 shows a result of Example A in a case where the offset distance L of the spacer 4 was 6 mm.

[Table 2]

| H [mm] | L[mm] | Delayed fracture critical stress [MPa] |
|---|---|---|
| 0.5 | | 1200 |
| 1 | | 1100 |
| 2 | 6 | 1000 |
| 4 | | 1000 |
| 6 | | 1000 |

As can be seen from Table 2, in a case where the offset distance L of the spacer 4 was 6 mm, when the height H of the spacer 4 was 0.5mm, the delayed fracture critical stress was the same as the normal shearing condition with the use of no spacer 4. However, when the height H of the spacer 4 was equal to or more than 1 mm, the delayed fracture critical stress decreased.

[Example B]

Table 3 shows an evaluation result of Example B. In Table 3, D indicates a gap between the surface 2B of the sheet presser 2 and the metal sheet 10.

[Table 3]

| H [mm] | D [mm] | Delayed fracture critical stress [MPa] |
|---|---|---|
| 1.5 | 0.1 | 1200 |
| 1.7 | 0.3 | 1100 |
| 1.9 | 0.5 | 1000 |
| 2.4 | 1.0 | 800 |
| 3.4 | 2.0 | 600 |

Table 3 shows delayed fracture critical stresses in a case where the height H of the spacer 4 was changed to 1.5 mm, 1.7 mm, 1.9 mm, 2.4 mm, and 3.4 mm.
As can be seen from Table 3, when the height H was equal to or more than 1.7 mm, the delayed fracture critical stress decreased. As the height H of the spacer 4 increased, the delayed fracture critical stress decreased. That is, as the gap between the metal sheet 10 and the surface 2B of the sheet presser 2 was larger, the delayed fracture critical stress decreased. Note that the thickness of the test piece is 1.4 mm in the present example. Accordingly, the gap between the surface 2B of the sheet presser 2 and the metal sheet 10 is a value obtained by subtracting 1.4 mm from the height H of the spacer 4.

[Example C]

Table 4 shows an evaluation result of Example C. Table 4 shows an example in which the offset distance L of the spacer 4 was changed while the height H of the spacer 4 was a specified value (2 mm).

[Table 4]

| H [mm] | L[mm] | Delayed fracture critical stress [MPa] |
|---|---|---|
| | 0 | 1200 |
| | 0.5 | 1100 |
| 2 | 1 | 1100 |
| | 2 | 1000 |
| | 4 | 700 |

(continued)

| H [mm] | L[mm] | Delayed fracture critical stress [MPa] |
|---|---|---|
| | 6 | 500 |

In Table 4, the thickness H of the spacer 4 was set to 2 mm, and the offset distance L of the spacer 4 from the lower blade 1A was changed to 0 mm, 0.5 mm, 1 mm, 2 mm, 4 mm, and 6 mm.

In a case where the offset distance L was 0, the spacer 4 itself functioned as the lower die 1, and the critical stress did not change. However, in a case where the offset distance L was equal to or more than 0.5 mm, the delayed fracture critical stress decreased as the offset distance L increased.

Table 5 shows a case where the height H was changed while the offset distance L of the spacer 4 was fixed (2 mm).

[Table 5]

| H [mm] | L[mm] | Delayed fracture critical stress [MPa] |
|---|---|---|
| 0.1 | | 1100 |
| 0.3 | | 1100 |
| 0.5 | | 1100 |
| 1 | 2 | 1000 |
| 2 | | 1000 |
| 3 | | 900 |
| 4 | | 800 |

Table 5 shows delayed fracture critical stresses in a case where the height H was changed while the offset distance L of the spacer 4 was 2 mm.

As can be seen from Table 5, it is found that the delayed fracture critical stress decreases when the height H is equal to or more than 0.1 mm, and the delayed fracture critical stress decreases as the height H increases.

[Overall Evaluation]

From the results of Tables 1 to 5, the following finding is obtained in terms of a condition that causes no delayed fracture with a maximum load stress of 1000 MPa.

In Examples, from the conditions in the shearing condition A, it is found that shearing should be performed under a condition that the sheet presser 2 is distanced from a contact portion with the lower blade 1A by 6 mm or less, and the offset distance from the metal sheet 10 is equal to or less than 2 mm.

From the conditions in the shearing condition B, it is found that shearing should be performed under a condition where the sheet presser 2 floats from the metal sheet 10 by 0.5 mm or less (that is, the height H of the spacer 4 is equal to or less than 1.9 mm).

In addition, from the conditions in the shearing condition C, it is found that shearing should be performed under a condition that an offset gap between the metal sheet 10 and the surface 1B of the lower die 1 is equal to or less than 2 mm, and the offset distance from the contact portion with the lower blade 1A to the metal sheet 10 is equal to or less than 2 mm.

FIG. 9 is an example of a post-trimmed component. In FIG. 9, a position indicated by reference sign 12 is a shear position.

This component is sheared at the position indicated by reference sign 12. As the time of shearing, shearing was performed under a condition D and a condition E as follows.

Under the condition D, shearing was performed with a gap of 2 mm being provided between the surface 2B of the sheet presser 2 and the metal sheet 10. Under the condition E, shearing was performed in a generally close contact state with the gap between the surface 2B of the sheet presser 2 and the metal sheet 10 being equal to or less than 0.5 mm and the gap between the metal sheet 10 and the surface 1B of the lower die 1 being also equal to or less than 1 mm.

Herein, the condition D corresponds to a case where the height H of the spacer 4 is 3.4 mm in Table 3.

The condition E corresponds to a state where the height H of the spacer 4 is less than 1.9 mm in Table 3 in a portion where the metal sheet 10 has no contact with the upper and lower dies 1, 3. Even in a state where the metal sheet 10 has no contact with only the lower die 1, the offset distance L in Table 4 is less than 1 mm. Accordingly, it is considered that the condition E satisfies the condition that causes no delayed fracture with a maximum load stress of 1000 MPa.

Note that no strain is introduced in a post-trimmed portion after a sheared end surface is formed. Accordingly, the influence of a plastic strain on stress relaxation of the sheared end surface can be ignored. Accordingly, the delayed fracture critical stress as in the shearing in Tables 1, 2, and 3 can be applied. In the meantime, in a case where a processing strain is applied after shearing, there is an influence by relaxing of a shearing residual stress by a plastic strain on the sheared end surface. Accordingly, the present invention cannot be necessarily applied depending on a processing strain amount.

In a post-trimmed portion in FIG. 9, residual stresses by CAE analysis in representative portions A to J (not shown), and delayed fracture test results under each of the conditions D, E are shown in Table 6.

[Table 6]

| OK: No delayed fracture NG: With delayed fracture | | | |
|---|---|---|---|
| Representative portion | Residual stress by CAE analysis [MPa] | Delayed fracture result in condition D | Delayed fracture result in condition E |
| A | 950 | NG | OK |
| B | 100 | OK | OK |
| C | 800 | NG | OK |
| D | 1000 | NG | OK |
| E | 400 | OK | OK |
| H | 900 | NG | OK |
| I | 700 | NG | OK |
| J | 1000 | NG | OK |

As can be seen from Table 6, some portions had delayed fracture under the condition D.

In the meantime, under the condition E, shearing was performed under an appropriate condition by the delayed fracture evaluation method, and therefore no delayed fracture occurred. That is, under the condition E, a press-formed article having a post-trimmed end surface excellent in delayed fracture resistance was obtained. Thus, it is found that the evaluation of the delayed fracture characteristic based on the present invention was adequate.

Here, Japanese Patent Application No. 2023-072154 (filed on April 26, 2023) to which the present application claims priority is incorporated herein by reference in its entirety. Herein, the present invention has been described referring to a limited number of embodiments, but the scope of the present invention is not limited to them, and it is obvious for a person skilled in the art that the embodiments are modifiable based on the disclosure.

Reference Signs List

1: lower die
1A: lower blade
1B: surface to restrain metal sheet
2: sheet presser
2B: surface to restrain metal sheet
3: upper die
3A: upper blade
4: spacer
10: metal sheet
20: correlation information calculating unit
30: evaluation main unit
40: storage unit
40A: correlation information
50A: first step
50B: second step
50C: third step
50D: fourth step

H: thickness (height) of spacer
L: offset distance of spacer

## Claims

1. A delayed fracture characteristic evaluation method for evaluating a delayed fracture characteristic of a sheared end surface of a metal sheet made of a high-tensile steel sheet, the delayed fracture characteristic evaluation method comprising:

   preparing a test piece having the sheared end surface from the metal sheet by performing shearing on the metal sheet;
   leaving the test piece under a hydrogen charging environment with a load stress being applied to the sheared end surface of the test piece thus prepared; and
   evaluating the delayed fracture characteristic of the sheared end surface relative to a shearing condition in the shearing.

2. The delayed fracture characteristic evaluation method according to claim 1, wherein:

   the test piece includes a plurality of test pieces for different shearing conditions in the shearing; and
   the delayed fracture characteristic of the metal sheet is evaluated for each of the shearing conditions.

3. The delayed fracture characteristic evaluation method according to claim 1 or 2, further comprising:

   finding, for the shearing condition, a load-stress limit value causing no delayed fracture, under the hydrogen charging environment, on the sheared end surface after the shearing, wherein
   the delayed fracture characteristic of the sheared end surface is evaluated based on the found load-stress limit value.

4. The delayed fracture characteristic evaluation method according to claim 3, further comprising:

   finding, in advance, a correlation between the shearing condition and the load-stress limit value; and
   evaluating an allowable load stress for the shearing condition based on the correlation.

5. The delayed fracture characteristic evaluation method according to any one of claims 1 to 4, wherein the shearing condition is a metal sheet restraint condition in the shearing.

6. The delayed fracture characteristic evaluation method according to any one of claims 1 to 5, wherein:

   the shearing is performed by shearing the metal sheet by a lower blade and an upper blade with the metal sheet being restrained by a lower die and a sheet presser, the lower die including the lower blade provided in a shoulder portion of the lower die;
   a spacer is inserted between the metal sheet to be restrained and the sheet presser; and
   the shearing condition is changed by changing at least one condition out of an offset distance from the lower blade to the spacer and a thickness of the spacer.

7. The delayed fracture characteristic evaluation method according to any one of claims 1 to 5, wherein:

   the shearing is performed by shearing the metal sheet by a lower blade and an upper blade with the metal sheet being restrained by a lower die and a sheet presser, the lower die including the lower blade provided in a shoulder portion of the lower die;
   an opposed distance between the lower die and the sheet presser restraining the metal sheet is defined by inserting a spacer thicker than a thickness of the metal sheet between the lower die and the sheet presser at a position where the spacer does not make contact with the metal sheet; and
   the shearing condition is changed by changing the thickness of the spacer.

8. The delayed fracture characteristic evaluation method according to any one of claims 1 to 5, wherein:

the shearing is performed by shearing the metal sheet by a lower blade and an upper blade with the metal sheet being restrained by a lower die and a sheet presser, the lower die including the lower blade provided in a shoulder portion of the lower die;

a spacer is inserted between the metal sheet to be restrained and the lower die; and

the shearing condition is changed by changing at least one condition out of an offset distance from the lower blade to the spacer and a thickness of the spacer.

9. A delayed fracture prediction method for predicting whether or not delayed fracture occurs by shearing in a press-formed article produced by performing the shearing on a pressed component produced by performing press forming on a metal sheet, the delayed fracture prediction method comprising:

finding, in advance, a correlation between a shearing condition in the shearing and a load-stress limit value based on the delayed fracture characteristic evaluation method according to any one of claims 3 to 8; and

predicting, based on the correlation, whether or not delayed fracture occurs in the press-formed article due to the shearing on the pressed component.

10. The delayed fracture prediction method according to claim 9, wherein the shearing condition is a metal sheet restraint condition in the shearing.

11. A program causing:

a storage unit to store correlation information on a correlation between a shearing condition in shearing and a load-stress limit value, the correlation being found based on the delayed fracture characteristic evaluation method according to any one of claims 3 to 8; and

a computer to execute a process of finding, with reference to the correlation information thus stored, an applicable load-stress limit value corresponding to an input shearing condition.

12. A program for predicting whether or not delayed fracture occurs by shearing in a press-formed article produced by performing the shearing on a pressed component produced by performing press forming on a metal sheet, the program causing:

a storage unit to store correlation information on a correlation between a shearing condition in the shearing and a load-stress limit value, the correlation being found based on the delayed fracture characteristic evaluation method according to any one of claims 3 to 8; and

a computer to execute

a first processing step of finding, with reference to the correlation information thus stored, a load-stress limit value corresponding to an input shearing condition, and

a second processing step of determining whether or not delayed fracture occurs, based on a forming stress as a load stress applied to a sheared end surface formed by the shearing performed on the pressed component after the shearing and the load-stress limit value found in the first processing step.

13. The program according to claim 11 or 12, wherein the shearing condition is a metal sheet restraint condition in the shearing.

14. A press-formed article production method for producing a press-formed article by performing shearing on a pressed component produced by performing press forming on a metal sheet, the press-formed article production method comprising:

determining a shearing condition evaluated to cause no delayed fracture in the press-formed article, by the delayed fracture characteristic evaluation method according to any one of claims 1 to 8; and

performing the shearing under the shearing condition thus determined.

15. The press-formed article production method according to claim 14, wherein the shearing condition is a metal sheet restraint condition in the shearing.

16. A shearing device for performing shearing on a metal sheet to prepare a test piece to evaluate a delayed fracture characteristic, the shearing device comprising:

a lower die including a lower blade provided in a shoulder portion of the lower die;
a sheet presser; and
an upper die including an upper blade provided in a shoulder portion of the upper die, wherein:

the shearing device is configured to shear the metal sheet by the lower blade and the upper blade with the metal sheet being restrained by the lower die and the sheet presser; and
the shearing device further comprises a spacer inserted between the metal sheet and the sheet presser.

17. A shearing device for performing shearing on a metal sheet to prepare a test piece to evaluate a delayed fracture characteristic, the shearing device comprising:

a lower die including a lower blade provided in a shoulder portion of the lower die;
a sheet presser; and
an upper die including an upper blade provided in a shoulder portion of the upper die, wherein:

the shearing device is configured to shear the metal sheet by the lower blade and the upper blade with the metal sheet being restrained by the lower die and the sheet presser;
the shearing device further comprises a spacer inserted between the lower die and the sheet presser at a position where the spacer does not make contact with the metal sheet; and
the spacer has a thickness thicker than a thickness of the metal sheet.

18. A shearing device for performing shearing on a metal sheet to prepare a test piece to evaluate a delayed fracture characteristic, the shearing device comprising:

a lower die including a lower blade provided in a shoulder portion of the lower die;
a sheet presser; and
an upper die including an upper blade provided in a shoulder portion of the upper die, wherein:

the shearing device is configured to shear the metal sheet by the lower blade and the upper blade with the metal sheet being restrained by the lower die and the sheet presser; and
the shearing device further comprises a spacer inserted between the metal sheet and the lower die.

# FIG. 1

FIRST STEP — 50A

SHEARING STEP

↓

SECOND STEP — 50B

APPLICATION OF
EXTERNAL STRESS

↓

THIRD STEP — 50C

LEAVING UNDER HYDROGEN
CHARGING ENVIRONMENT

↓

FOURTH STEP — 50D

EVALUATION

FIG. 2

FIG. 3

FIG. 4

GAP DUE TO FLOAT    2B

3

2

10

10A

3A    1A

1B

1

FIG. 5

FIG. 6

# FIG. 7

# FIG. 8

FIG. 9

## INTERNATIONAL SEARCH REPORT

International application No.

**PCT/JP2023/044117**

| A. | CLASSIFICATION OF SUBJECT MATTER |
|---|---|

*G01N 3/24*(2006.01)i; *G01N 17/00*(2006.01)i
FI:    G01N3/24; G01N17/00

According to International Patent Classification (IPC) or to both national classification and IPC

| B. | FIELDS SEARCHED |
|---|---|

Minimum documentation searched (classification system followed by classification symbols)

G01N3/24; G01N17/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| P, X | JP 2023-173358 A (JFE STEEL CORP.) 07 December 2023 (2023-12-07) paragraphs [0012], [0019]-[0034], [0061], [0067]-[0077] | 1-5, 9-15 |
| P, A | | 6-8, 16-18 |
| X | JP 2023-016506 A (NIPPON STEEL CORPORATION) 02 February 2023 (2023-02-02) paragraphs [0049], [0059]-[0061], fig. 10, 12(A), 12(B) | 16-18 |
| A | | 6-8 |
| A | JP 7100282 B2 (JFE STEEL CORP.) 13 July 2022 (2022-07-13) entire text | 1-18 |
| A | JP 2018-185183 A (JFE STEEL CORP.) 22 November 2018 (2018-11-22) entire text | 1-18 |
| A | WO 2023/037961 A1 (JFE STEEL CORP.) 16 March 2023 (2023-03-16) entire text | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 December 2023** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/044117**

**Box No. III        Observations where unity of invention is lacking (Continuation of item 3 of first sheet)**

This International Searching Authority found multiple inventions in this international application, as follows:

Claims are classified into the following four inventions.

(Invention 1) Claims 1-15
    Claims 1-5 have the special technical feature of a "delayed fracture characteristics evaluation method for evaluating delayed fracture characteristics on the shear end surface of a metal plate made of a high-strength steel plate, the method involving: performing a shearing process on the metal plate to prepare a test piece of the metal plate having the shear end surface; and placing the prepared test piece under a hydrogen penetration environment in a state, in which a load stress is applied to the shear end surface of the test piece, and evaluating delayed fracture characteristics of the shear end surface with respect to the shear conditions of the shearing process" and is thus classified as invention 1.

(Invention 2) Claim 16
    Claim 16 shares, with claim 1 classified as invention 1, the common technical feature of "shearing a metal plate off to prepare a test piece for evaluating delayed fracture characteristics." However, said technical feature does not make a contribution over the prior art in light of the disclosure of document 3 (in particular, see paragraphs [0035]), and thus cannot be said to be a special technical feature. Also, there are no other same or corresponding special technical features between claim 16 and claim 1.
    In addition, claim 16 is not dependent on claim 1. In addition, claim 16 is not substantially identical to or similarly closely related to any of the claims classified as invention 1.
Therefore, claim 16 cannot be classified as invention 1.
    Also, claim 16 has a special technical feature of a "shear processing apparatus for shearing a metal plate off to prepare a test piece for evaluating delayed fracture characteristics, the apparatus comprising: a lower die having a lower blade on shoulder; a blank holder; and an upper die having an upper blade on shoulder, wherein the metal plate is sheared off by the lower blade and the upper blade while being restrained by the lower die and the blank holder, and a spacer is inserted between the metal plate and the blank holder" and is thus classified as invention 2.

(Invention 3) Claim 17
    Claim 17 shares, with claim 1 classified as invention 1, the common technical feature of "shearing a metal plate off to prepare a test piece for evaluating delayed fracture characteristics." However, said technical feature does not make a contribution over the prior art in light of the disclosure of document 3 (in particular, see paragraphs [0035]), and thus cannot be said to be a special technical feature. Also, there are no other same or corresponding special technical features between claim 17 and claim 1.
    In addition, claim 17 is not dependent on claim 1. In addition, claim 17 is not substantially identical to or similarly closely related to any of the claims classified as invention 1.
Therefore, claim 17 cannot be classified as invention 1.
    Also, claim 17 has a special technical feature of a "shear processing apparatus for shearing a metal plate off to prepare a test piece for evaluating delayed fracture characteristics, the apparatus comprising: a lower die having a lower blade on shoulder; a blank holder; and an upper die having an upper blade on shoulder, wherein the metal plate is sheared off by the lower blade and the upper blade while being restrained by the lower die and the blank holder, and a spacer is inserted between the lower die and the blank holder at a position not in contact with the metal plate, and the thickness of the spacer is greater than the thickness of the metal plate" and is thus classified as invention 3.

(Invention 4) Claim 18
    Claim 18 shares, with claim 1 classified as invention 1, the common technical feature of "shearing a metal plate off to prepare a test piece for evaluating delayed fracture characteristics." However, said technical feature does not make a contribution over the prior art in light of the disclosure of document 3 (in particular, see paragraphs [0035]), and thus cannot be said to be a special technical feature. Also, there are no other same or corresponding special technical features between claim 18 and claim 1.
    In addition, claim 18 is not dependent on claim 1. In addition, claim 18 is not substantially identical to or similarly closely related to any of the claims classified as invention 1.
Therefore, claim 18 cannot be classified as invention 1.
    Also, claim 18 has a special technical feature of a "shear processing apparatus for shearing a metal plate off to prepare a test piece for evaluating delayed fracture characteristics, the apparatus comprising: a lower die having a lower blade on shoulder; a blank holder; and an upper die having an upper blade on shoulder, wherein the metal plate

Form PCT/ISA/210 (continuation of first sheet) (January 2015)

**INTERNATIONAL SEARCH REPORT**

International application No.

**PCT/JP2023/044117**

---

**Box No. III**      **Observations where unity of invention is lacking (Continuation of item 3 of first sheet)**

is sheared off by the lower blade and the upper blade while being restrained by the lower die and the blank holder, and a spacer is inserted between the metal plate and the lower die" and is thus classified as invention 4.

1. ☐    As all required additional search fees were timely paid by the applicant, this international search report covers all searchable claims.

2. ☑    As all searchable claims could be searched without effort justifying additional fees, this Authority did not invite payment of additional fees.

3. ☐    As only some of the required additional search fees were timely paid by the applicant, this international search report covers only those claims for which fees were paid, specifically claims Nos.:

4. ☐    No required additional search fees were timely paid by the applicant. Consequently, this international search report is restricted to the invention first mentioned in the claims; it is covered by claims Nos.:

**Remark on Protest**      ☐    The additional search fees were accompanied by the applicant's protest and, where applicable, the payment of a protest fee.

                                      ☐    The additional search fees were accompanied by the applicant's protest but the applicable protest fee was not paid within the time limit specified in the invitation.

                                      ☐    No protest accompanied the payment of additional search fees.

---

Form PCT/ISA/210 (continuation of first sheet) (January 2015)

## INTERNATIONAL SEARCH REPORT
### Information on patent family members

International application No.

**PCT/JP2023/044117**

| Patent document cited in search report | | | Publication date (day/month/year) | Patent family member(s) | Publication date (day/month/year) |
|---|---|---|---|---|---|
| JP | 2023-173358 | A | 07 December 2023 | (Family: none) | |
| JP | 2023-016506 | A | 02 February 2023 | (Family: none) | |
| JP | 7100282 | B2 | 13 July 2022 | US 2023/0074839 A1 entire text | |
| JP | 2018-185183 | A | 22 November 2018 | (Family: none) | |
| WO | 2023/037961 | A1 | 16 March 2023 | (Family: none) | |

Form PCT/ISA/210 (patent family annex) (January 2015)

**EP 4 692 755 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5196926 B
- JP 2023072154 A